# FASCICULE DE BREVET EUROPEEN

(11) **EP 1 504 610 B1**
(45) Date de publication et mention de la délivrance du brevet: **04.04.2007**
(21) Numéro de dépôt: 03747484.8
(22) Date de dépôt: 30.04.2003
(51) Int. Cl.: H04N 7/52

(54) **SYSTEME DE MULTIPLEXAGE DYNAMIQUE DE FLUX NUMERIQUES**
SYSTEM ZUM DYNAMISCHEN MULTIPLEXEN DIGITALER STRÖME
SYSTEM FOR THE DYNAMIC MULTIPLEXING OF DIGITAL STREAMS

(30) Priorité: 03.05.2002 FR 0205605
(43) Date de publication de la demande: 09.02.2005
(73) Titulaire: FRANCE TELECOM, 75015 Paris (FR)
(72) Inventeur: CURET, Dominique, F-35235 THORIGNE-FOUILLARD (FR); RELIER, Stéphanie, F-35410 DOMLOUP (FR); ROUX, Catherine, F-35000 RENNES (FR); MAISONNEUVE, Antoine, F-35510 CESSON SEVIGNE (FR)
(74) Mandataire: Vidon, Patrice
(86) Numéro de dépôt international: PCT/FR2003/001370
(87) Numéro de publication internationale: WO 2003/094531

(56) Documents cités:
- WO-A-98/38765
- FR-A- 2 797 548
- US-B1- 6 205 140
- "RTP PAYLOAD FORMAT FOR MPEG-4 FLEXMULTIPLEXED STREAMS DRAFT-CURET-AVT-RTP-MPEG4-FLEXMUX-00.TXT" , INTERNET ENGINEERING TASK FORCE INTERNET DRAFT, XX, XX, PAGE(S) 1-13 XP001033581 alinéas [7.4.4],[0008]
- J. VAN DEN MEER, S. RELIER, M. VEILLARD, P. CLEMENT, G. CHERRY: "RTP payload for MPEG4 Flexmutiplexed streams" IETF/AVT MEETING, [en ligne] - 10 décembre 2001 (2001-12-10) pages 1-19, XP002227892 Extrait de l'Internet: <URL:www.east.isi.edu/DIV7/IETF/AVT/52/sli des/03-roux.ppt> [extrait le 2003-01-17]
- HARTWIG S ET AL: "BROADCASTING AND PROCESSING OF PROGRAM GUIDES FOR DIGITAL TV" , SMPTE JOURNAL, SMPTE INC. SCARSDALE, N.Y, US, VOL. 106, NR. 10, PAGE(S) 727-732 XP000668926 ISSN: 0036-1682 page 729, colonne 1, ligne 42 - ligne 51 page 729, colonne 3, ligne 51 - ligne 56 page 730, colonne 3, ligne 52 - ligne 56
- HERPEL C ET AL: "MPEG-4 SYSTEMS: ELEMENTARY STREAM MANAGEMENT" SIGNAL PROCESSING. IMAGE COMMUNICATION, ELSEVIER SCIENCE PUBLISHERS, AMSTERDAM, NL, vol. 15, janvier 2000 (2000-01), pages 299-320, XP000885367 ISSN: 0923-5965

## Description

Le domaine de l'invention est celui de la transmission et de la diffusion de flux de données numériques, notamment pour les applications multimédia.

Plus précisément, l'invention concerne un procédé de multiplexage dynamique de flux numériques, ainsi que le signal, le dispositif de multiplexage, et le récepteur correspondant.

L'invention trouve notamment des applications dans le domaine de la diffusion de données multimédia de type MPEG2 (en anglais "Motion Picture Coding Experts Group", en français "Groupe d'experts pour le codage d'images animées"), MPEG4, DVB (en anglais "Digital Video Broadcast", en français "Diffusion vidéo numérique"), etc.

Il est aujourd'hui fréquent, en vue notamment de réaliser des économies en termes de bande passante, de multiplexer différents flux numériques au sein d'un même signal.

Un tel multiplexage peut être prédéterminé et sa structure est alors constante dans le temps.

Le multiplexage peut aussi être dynamique, c'est-à-dire que la structure du signal multiplexé change dans le temps. Dans ce cas, une table de configuration, qui fait partie de la signalisation du multiplex, est généralement définie. Elle peut être transmise par le même canal de transmission que le multiplex (on parle alors de signalisation "dans la bande") ou par tout autre moyen, par exemple par un canal spécifique, dit de signalisation, distinct du canal de données par lequel sont véhiculés les flux numériques utiles (on parle alors de signalisation "hors bande").

Ainsi, dans le cadre de la norme MPEG4, une table de configuration (ou table d'allocation) appelée FlexMuxChannelTable indique à quel flux numérique est associée une unité de flux considérée, en fonction de son index. Un tel index, inscrit dans un champ particulier de l'unité de flux, est codé sur 256 bits. Par exemple, pour une table de configuration donnée, l'index 112 peut correspondre à un flux audio, et l'index 118 à un flux vidéo.

Sur réception d'une unité de flux, le récepteur consulte la table de configuration FlexMuxChannelTable, et détermine, en fonction de l'index de l'unité de flux, le traitement à lui appliquer: dans l'exemple précédent, la table FlexMuxChannelTable indique au récepteur que l'unité de flux d'index 118 doit être transmise à un décodeur vidéo.

Dans le cadre des applications fonctionnant en mode "multicast" (en français "diffusion sélective"), une telle table d'allocation est envoyée périodiquement (par exemple une fois par seconde dans le cadre des applications de type Internet), de façon à être rapidement disponible pour un utilisateur qui vient de se connecter.

Dans le cadre d'un multiplexage dynamique, une nouvelle table d'allocation est envoyée à chaque changement de la configuration du multiplex. Le récepteur utilise à chaque instant la dernière table de configuration reçue pour déterminer le traitement à appliquer à une unité de flux particulière.

Cependant, cette méthode a pour inconvénient d'être peu robuste. En effet, en cas de perte ou d'erreur au cours de la transmission de la table d'allocation, le traitement effectué par le récepteur est erroné. Pour reprendre l'exemple donné précédemment dans le cadre de MPEG4, le récepteur peut ainsi aiguiller l'unité de flux d'index 118 vers un décodeur vidéo, alors que la nouvelle table de configuration, qu'il n'a pas reçue en raison d'une perturbation du réseau, indique que l'index 118 correspond à une description de scène.

Or, de telles pertes ou détérioration de paquets sont fréquentes, notamment dans le cadre de transmissions par réseau, sujet à perturbations.

L'invention a notamment pour objectif de pallier ces inconvénients de l'art antérieur.

Plus précisément, un objectif de l'invention est de fournir une technique de multiplexage dynamique de flux numériques robuste, et résistant aux éventuelles perturbations de l'environnement de transmission.

Un autre objectif de l'invention est de mettre en oeuvre une telle technique qui soit précise quant au changement de configuration, et économe en termes de bande passante.

L'invention a encore pour objectif de fournir une telle technique qui permette une indépendance des différents flux multiplexés par rapport à l'instant de changement de configuration.

Ces objectifs, ainsi que d'autres qui apparaîtront par la suite, sont atteints à l'aide d'un procédé de multiplexage dynamique de flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique.

Selon l'invention, ladite table d'allocation porte un numéro de version, et, pour signaler qu'un changement de version de ladite table d'allocation s'applique à un flux numérique donné, on transmet une rafale d'au moins une unité de flux de changement de version comprenant :
- l'identifiant courant dudit flux numérique;
- un indicateur permettant de déterminer que l'unité de flux est une unité de flux de changement de version;
- le numéro de version devenant applicable pour ledit flux numérique.

Ainsi, l'invention repose sur une approche tout à fait nouvelle et inventive du multiplexage dynamique de flux numériques. En effet, l'invention repose sur l'introduction, d'une part, d'un numéro de version de la table de configuration et, d'autre part, d'éléments de contenus fictifs, appelés unités de flux de changement de version, portant le numéro de version de la table de configuration du multiplex. Ces éléments de contenu fictifs portant également l'identifiant courant du flux numérique, ils permettent aux différents flux multiplexés de changer de configuration indépendamment les uns des autres. En outre, ces unités de flux de changement de version sont utilisées uniquement lors des phases transitoires de changement de configuration, de sorte que le procédé de l'invention est peu consommateur en termes de bande passante.

Préférentiellement, ladite rafale comprend au moins deux unités de flux de changement de version consécutives.

On réduit ainsi les risques inhérents à la perte ou à la détérioration de l'unité de flux de changement de version, ce qui rend le procédé de multiplexage dynamique de l'invention plus robuste.

Avantageusement, ladite rafale comprend un nombre d'unités de flux de changement de version consécutives suffisant pour couvrir une fenêtre de perturbation prédéterminée pendant laquelle il est possible qu'aucune unité de flux ne soit reçue de façon correcte.

On pallie ainsi au problème de la perte ou de la détérioration de paquets en cas de perturbation du réseau ou du canal de transmission, et on s'assure qu'en cas de changement de configuration, le récepteur ait toujours connaissance du numéro de version de la table d'allocation à utiliser. En effet, au moins une unité de flux de changement de version est reçue avant le début de la fenêtre de perturbation et/ou après la fin de cette fenêtre.

Dans un mode de réalisation avantageux de l'invention, ladite fenêtre de perturbation est comprise entre 0,2 et 1 s.

Plus généralement, la durée de la fenêtre de perturbation dépend des caractéristiques du réseau, et la longueur de la rafale est fixée en conséquence.

De manière préférentielle, ledit indicateur est un champ précisant la longueur de la partie utile de l'unité de flux, ladite valeur valant par définition zéro lorsqu'il s'agit d'une unité de flux de changement de version.

L'unité de flux de changement de version est ainsi de structure identique à une unité de flux qu'on pourrait qualifier d'unité de flux informative ou utile, mais elle peut être aisément détectée par le récepteur, en raison de l'indication; dans le champ correspondant, qu'une telle unité de flux est de longueur nulle. Un élément de contenu "réel" ne pouvant être de longueur nulle, le récepteur en déduit directement que l'élément de contenu est un élément de contenu fictif, indicatif d'un changement de version de la table de configuration.

Selon une caractéristique avantageuse de l'invention, dans une unité de flux de changement de version, le numéro de version est inscrit dans la partie utile de ladite unité de flux.

On utilise ainsi la structure des unités de flux informatives, et notamment le champ réservé à la partie utile des éléments de contenu, pour y insérer le numéro de version de la table d'allocation qui doit être utilisée pour le flux numérique considéré : de cette façon, les unités de flux de changement de version ont la même structure que les unités de flux informatives et peuvent être véhiculées au sein du multiplex, dans le même canal.

Préférentiellement, au moins dans une phase de transition suivant la transmission de ladite rafale, on transmet au moins une autre unité de flux de changement de version.

Ainsi, une unité de flux de changement de version peut être insérée entre deux unités de flux informatives, de façon à indiquer le numéro de version de la table de configuration qui devra être prise en compte pour la première unité de flux de longueur non nulle reçue après l'unité de flux de changement de version.

Selon une première variante avantageuse, ladite table d'allocation est transmise dans ledit canal.

On parle alors de transmission dans la bande.

Selon une deuxième variante avantageuse, ladite table d'allocation est transmise par une voie distincte dudit canal.

On parle alors de transmission "hors bande" .

Préférentiellement, ladite table d'allocation est transmise au moins deux fois avant de devenir applicable pour au moins un desdits flux.

On accroît ainsi la probabilité que le récepteur ait reçu la nouvelle table de configuration, avant qu'une unité de changement de flux de version n'indique qu'elle est applicable pour l'un au moins des flux numériques. Ceci contribue à la robustesse du procédé de multiplexage dynamique de l'invention.

Avantageusement, un changement de version s'applique dès la première unité de flux du flux concerné reçue après ladite rafale.

De manière préférentielle, lesdits flux appartiennent au groupe comprenant :
- les signaux audiovisuels naturels;
- les signaux audiovisuels synthétiques ;
- les scènes en deux ou trois dimensions ;
- les données descriptives de données (souvent appelées méta-data) ;
- des données de protection d'accès et de droits.

De manière avantageuse, un tel procédé est mis en oeuvre dans des applications de type MPEG4 ou MPEG2.

L'invention concerne également un signal multiplexant dynamiquement des flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique.

Selon l'invention, ladite table d'allocation porte un numéro de version, et, pour signaler qu'un changement de version de ladite table d'allocation s'applique à un flux numérique donné, un tel signal comprend une rafale d'au moins une unité de flux de changement de version comprenant :
- l'identifiant courant dudit flux numérique ;
- un indicateur permettant de déterminer que l'unité de flux est une unité de flux de changement de version;
- le numéro de version devenant applicable pour ledit flux numérique.

Préférentiellement, ledit indicateur est un champ précisant la longueur de la partie utile de l'unité de flux, ladite valeur valant par définition zéro lorsqu'il s'agit d'une unité de flux de changement de version.

Avantageusement, ledit signal étant véhiculé sur un canal de données permettant la transmission d'unités de flux utiles, distinct d'un canal de signalisation permettant la transmission de données de signalisation, ladite unité de flux de changement de version a la même structure que lesdites unités de flux utiles et est véhiculée par ledit canal de données.

L'unité de flux de changement de version constitue donc un élément de contenu fictif, de structure identique à une unité de flux dite utile ou informative, et est transmise par le même canal que ces dernières, et non par un canal de signalisation distinct. Les champs réservés à la longueur et à la partie utile de l'unité de flux comprennent respectivement, dans le cas d'une unité de flux de changement de version, la valeur nulle (pour indiquer qu'il s'agit d'un élément de contenu fictif) et le numéro de version de la table d'allocation applicable pour le flux considéré.

De manière préférentielle, un tel signal est mis en oeuvre par le procédé de multiplexage dynamique décrit précédemment.

L'invention concerne encore un dispositif de multiplexage dynamique de flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique.

Selon l'invention, ladite table d'allocation porte un numéro de version, et pour signaler qu'un changement de version de ladite table d'allocation s'applique à un flux numérique donné, on transmet une rafale d'au moins une unité de flux de changement de version comprenant :
- l'identifiant courant dudit flux numérique ;
- un indicateur permettant de déterminer que l'unité de flux est une unité de flux de changement de version ;
- le numéro de version devenant applicable pour ledit flux numérique.

Préférentiellement, un tel dispositif met en oeuvre le procédé de multiplexage dynamique décrit précédemment.

De manière avantageuse, un tel dispositif alimente des moyens de transmission :
- sur le réseau Internet ; et/ou
- sur un réseau DVB.

L'invention concerne aussi un récepteur d'un signal multiplexé selon le procédé de multiplexage dynamique décrit précédemment.

Avantageusement, un tel récepteur comprend des moyens de détection de ladite rafale, et des moyens d'activation du changement de version correspondant, sur le flux concerné.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'une plate-forme applicative de type MPEG4, à laquelle peut être avantageusement appliqué le procédé de multiplexage dynamique de l'invention ;
- la figure 2 illustre le changement de version d'une table d'allocation pouvant par exemple être mis en oeuvre dans le cadre de la plate-forme applicative de la figure 1;
- les figures 3a et 3b décrivent la structure comparée d'une unité de flux dite utile, ou informative, et d'une unité de flux de changement de version selon l'invention.

Le principe général de l'invention repose sur l'introduction, d'une part, d'un numéro de version de table d'allocation et, d'autre part, d'éléments de contenus fictifs indicatifs d'un changement de version, pour un flux numérique donné.

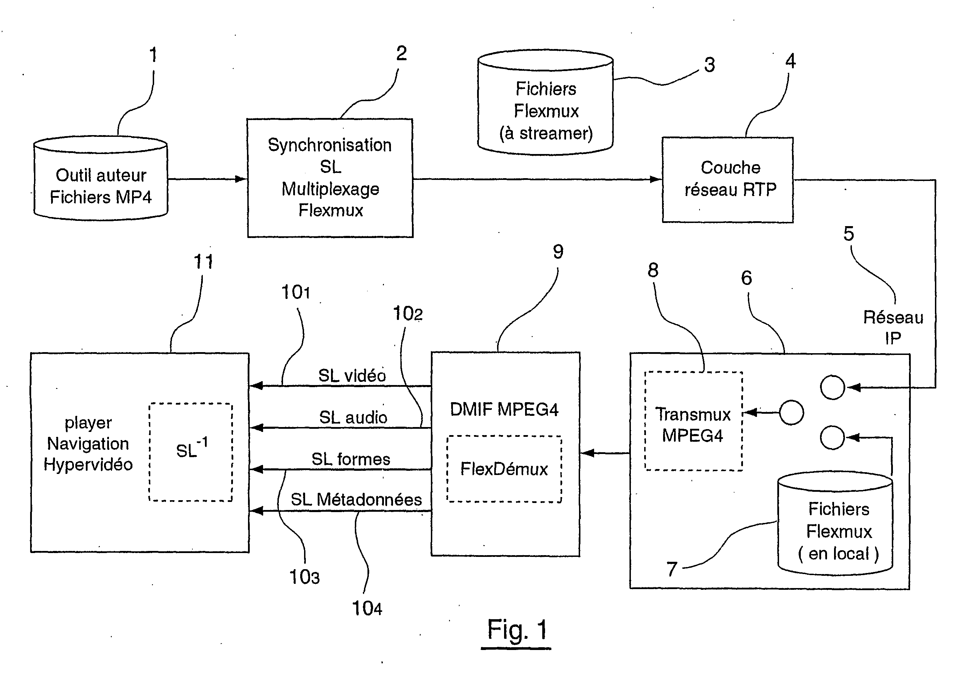

On présente, en relation avec la figure 1, un mode de réalisation de l'invention dans le cadre d'une plate-forme applicative de type MPEG4.

L'architecture d'une telle plate-forme est une architecture classique de la norme MPEG4, et sera donc décrite succinctement dans la suite. Pour plus de renseignements, le lecteur pourra se référer à la norme MPEG-4 système (ISO/IEC 14496-1).

Le bloc 1 constitue une base de données dans laquelle sont mémorisés une pluralité de fichiers de type MPEG4, permettant de générer une pluralité de flux numériques associés, que l'invention permet de multiplexer dynamiquement.

A l'émission, l'invention est plus particulièrement mise en oeuvre dans le bloc référencé 2 de synchronisation et de multiplexage des différents flux numériques. Dans le cadre de la norme MPEG4, ce bloc de multiplexage 2 utilise l'outil de multiplexage Flexmux. La sortie de l'outil FlexMux se fait en temps réel vers le bloc référencé 4 ou en temps différé vers le bloc référencé 3 pour stockage (les différents fichiers Flexmux correspondants sont alors stockés dans le bloc référencé 3).

Ainsi, les couches système MPEG4 sont utilisées pour multiplexer et synchroniser des flux MPEG4 audio, vidéo, et par exemple des données MPEG7 décrivant la segmentation des objets dans la vidéo MPEG4, et décrivant les liens attachés aux différents objets vidéo segmentés.

Le multiplex numérique traverse une couche réseau RTP ("Real Time Transfer" pour "transfert temps réel") référencée 4, puis transite, via un réseau IP ("Internet Protocol" peur "protocole internet") 5, jusqu'au bloc =référencé 6, où il est traité, en relation avec les fichiers Flexmux 7 mémorisés en local, à l'aide de l'outil Transmux 8 de la norme MPEG4, qui assure la compréhension du protocole RTP pour en extraire les signaux MPEG-4.

En réception, l'invention est plus particulièrement mise en oeuvre dans le bloc référencé 9, où le multiplex reçu est démultiplexé, de façon à générer une pluralité de flux élémentaires 10₁, 10₂, 10₃, 10₄ de type audio, vidéo, description de scène ou encore méta-données. Ces différents flux numériques sont ensuite traités par le bloc 11, en fonction de leur nature et de leur destination.

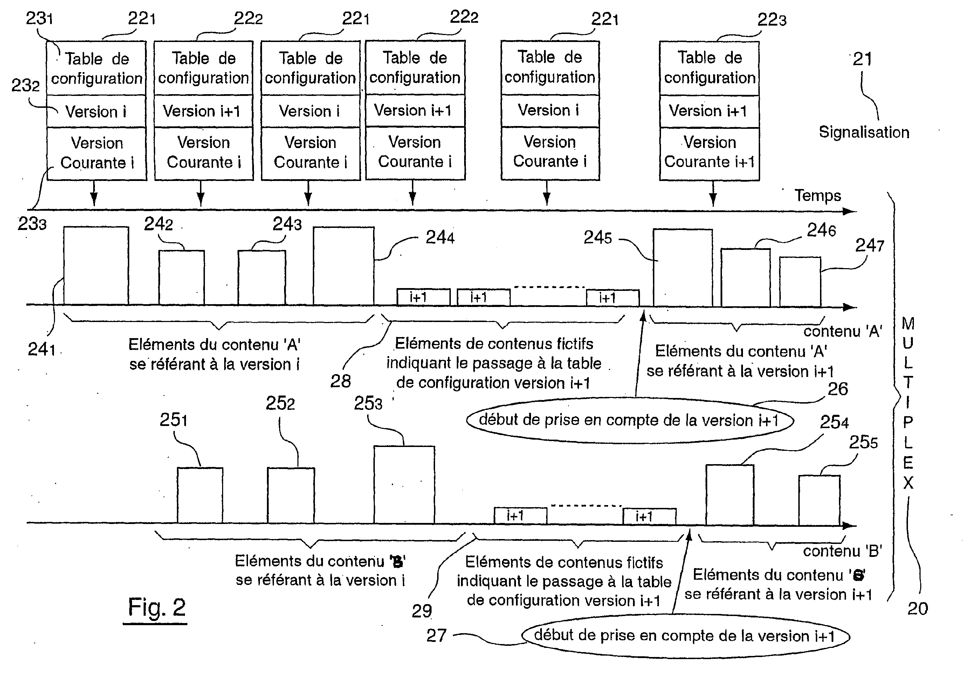

On présente désormais en relation avec la figure 2, la structure du multiplex mis en oeuvre dans le cadre de l'invention, comprenant des unités de flux de changement de version permettant des changements de version indépendants temporellement pour différents contenus ou flux numériques.

Par souci de simplification, on considère un multiplex 20 de deux flux numériques respectivement appelés contenu "A" et contenu "B". On comprendra aisément que les multiplex mis en oeuvre dans le cadre de l'invention comprennent généralement un nombre de flux numériques supérieur à 2.

Les données de signalisation 21 peuvent être envoyées hors bande, ou dans la bande. Elles comprennent notamment des paquets 22₁ à 22₃ véhiculant une table de configuration (ou table d'allocation) 23₁, son numéro de version 23₂, ainsi que le numéro de version 23₃ de la table de configuration courante.

Le multiplex 20 comprend, pour le contenu "A" (respectivement pour le contenu "B"), une pluralité d'unités de flux informatives ou utiles référencées 24₁ à 24₇ (respectivement 25₁ à 25₅).

Selon l'invention, pour indiquer que la table de configuration applicable pour le contenu "A" (respectivement "B") va changer (dans l'exemple de la figure 1, passage de la table d'allocation de numéro de version i à la table d'allocation de numéro de version i+1), on envoie une rafale 28 (respectivement 29) d'éléments de contenus fictifs, ou unités de flux de changement de version. On notera que les éléments de contenus fictifs 28, 29 sont représentés sur la figure 1 par des paquets de taille inférieure à celle des unités de flux informatives 24, à 24, et 25₁ à 25₅, ce qui symbolise le fait que ces éléments de contenus fictifs sont de longueur nulle.

Les rafales 28, 29 d'unités de flux de changement de version indiquent que la nouvelle table d'allocation applicable pour le contenu "A", "B" considéré porte le numéro de version i+1.

Ainsi, pour le contenu "A" (respectivement "B"), les unités de flux informatives 24₁ à 24₄ (respectivement 25₁ à 25₃) se réfèrent à la version i de la table de configuration. La réception de la rafale 28 (respectivement 29) d'éléments de contenu fictifs déclenche pour le contenu "A" (respectivement "B"), à l'instant référencé 26 (respectivement 27), le début de la prise en compte de la table de configuration de version i+1 pour les éléments de contenu référencés 24₅ à 24₇ (respectivement 25₄ et 25₅) qui seront reçus ultérieurement.

On notera que les instants 26 et 27 à laquelle la table de configuration applicable change sont distincts pour les contenus "A" et "B". L'invention permet ainsi avantageusement une indépendance des contenus multiplexés par rapport à l'instant de changement de configuration.

Le changement de version de la table de configuration applicable pour un contenu donné est pris en compte à l'apparition de la première unité de flux informative 24₅, 25₄ (c'est-à-dire à la réception du premier élément de contenu non-fictif).

On peut également remarquer que la table de configuration 23₁ de numéro de version i+1 est envoyée à plusieurs reprises, préalablement à l'envoi des rafales 28 et 29 d'unités de flux de changement de version. De cette façon, la table de configuration i+1 peut être décodée avant l'instant 26, 27 à laquelle elle devient applicable. En outre, un envoi répété de cette table accroît la probabilité qu'elle soit correctement reçue au moins une fois par le récepteur, en dépit d'éventuels perturbations du réseau de transmission.

Dans une variante de réalisation de l'invention, non illustrée sur la figure 1, au moins un élément de-contenu fictif est en outre inséré dans le contenu "A" et/ou "B" au cours d'une phase de transition suivant l'émission de la rafale 28 et/ou 29. Par exemple, une unité de flux de changement de version est insérée entre les paquets 24₅ et 24₆, pour indiquer un changement de version de la table d'allocation.

On choisit de préférence une durée de rafale 28, 29 supérieure à la durée d'une rafale d'erreur observée sur le réseau emprunté par le multiplex 20. De cette façon, on assure la robustesse du procédé de multiplexage de l'invention, en garantissant que le récepteur ait bien été informé du changement de version de table d'allocation, à l'instant 26, 27 où la nouvelle table devient applicable, en dépit d'éventuelles perturbations du réseau.

Le procédé de multiplexage de l'invention décrit en relation avec la figure 1 présente de nombreux avantages par rapport à une solution de multiplexage dynamique plus sommaire, dans laquelle on pourrait se contenter d'associer un numéro de version à la table de configuration.

En effet, le procédé de multiplexage dynamique de l'invention présente une plus grande robustesse, une plus grande précision, et une plus grande souplesse qu'un procédé de multiplexage dynamique qui se contenterait d'associer un numéro de version à la table de configuration, et selon lequel un récepteur surveillerait les changements de numéro de version de la table, de manière à ne prendre en compte une table d'allocation que si son numéro de version diffère de celui de la table précédente. Un tel procédé serait en effet sujet aux éventuelles pertes ou détériorations de la table d'allocation au cours de sa transmission. En outre, le changement de configuration se ferait obligatoirement au même moment pour tous les flux numériques du multiplex, ce qui ne correspond généralement pas aux exigences réelles.

Le procédé de multiplexage de l'invention présente également de nombreux avantages par rapport à un procédé de multiplexage dynamique qui pourrait consister à préciser, à chaque envoi d'une table de configuration et de son numéro de version associé, le numéro de version de la table de configuration courante. Il présente encore de nombreux avantages par rapport à un tel procédé, éventuellement complété, lorsque la signalisation se fait hors bande, par un mécanisme d'insertion, dans chaque élément de contenu ou unité de flux, du numéro de version de la table de configuration du multiplex.

En effet, si chaque élément de contenu multiplexé portait un numéro de version de la table de configuration du multiplex, la surcharge, en terme de taille, et donc d'encombrement de bande passante, induite par ces numéros de version serait très importante. Le numéro de version de la table d'allocation serait en effet présent dans chaque unité de flux multiplexée, notamment pendant les longues phases statiques où la configuration du multiplex ne change pas, et pendant les phases de changement de configuration du multiplex, même lorsque l'unité de flux considérée n'est pas affectée par un tel changement.

En outre, dans le cas d'une signalisation dans la bande, pour laquelle l'inscription du numéro de version sur chaque élément de contenu multiplexé ne serait pas obligatoire, la prise en compte d'un changement de configuration se produirait nécessairement au même instant pour tous les flux numériques multiplexés, ce qui ne reflète pas les exigences réelles du type d'applications multimédia considéré.

Le procédé de multiplexage dynamique de l'invention permet au contraire aux contenus multiplexés de changer de configuration indépendamment les uns des autres, et non tous ensemble.

Il ne présente pas l'inconvénient décrit précédemment lié à la surcharge en terme de taille introduite par l'indication des numéros de version sur les éléments de contenu. Il permet au contraire d'introduire les numéros de version, au niveau des unités de flux, uniquement lors des phases transitoires de changement réel de configuration, et ce, uniquement pour les éléments de contenu dont les caractéristiques de configuration changent.

En effet, selon le procédé de multiplexage dynamique de l'invention, lors des phases transitoires de changement de la table d'allocation, le numéro de version de la nouvelle table de configuration applicable est indiqué par des éléments de contenu fictifs, uniquement pour les contenus multiplexés dont les caractéristiques de configuration changent, et ce, avec la précision la plus fine possible.

De surcroît, selon l'invention, le numéro de version de la table de configuration n'est pas indiqué pendant les phases de stabilité de l'allocation, pour les différentes unités de flux multiplexées, que leurs caractéristiques de configuration aient changé ou non. Il n'est pas non plus indiqué au cours des phases transitoires de changement de la table d'allocation pour les unités de flux du multiplex dont les caractéristiques de configuration ne changent pas.

En conséquence, l'invention permet, par rapport à d'autres procédés de multiplexage dynamique plus sommaires qui pourraient être envisagés, une réduction du débit global du multiplex, une indépendance par rapport à l'instant de changement de configuration des flux multiplexés, et la plus fine précision de changement possible.

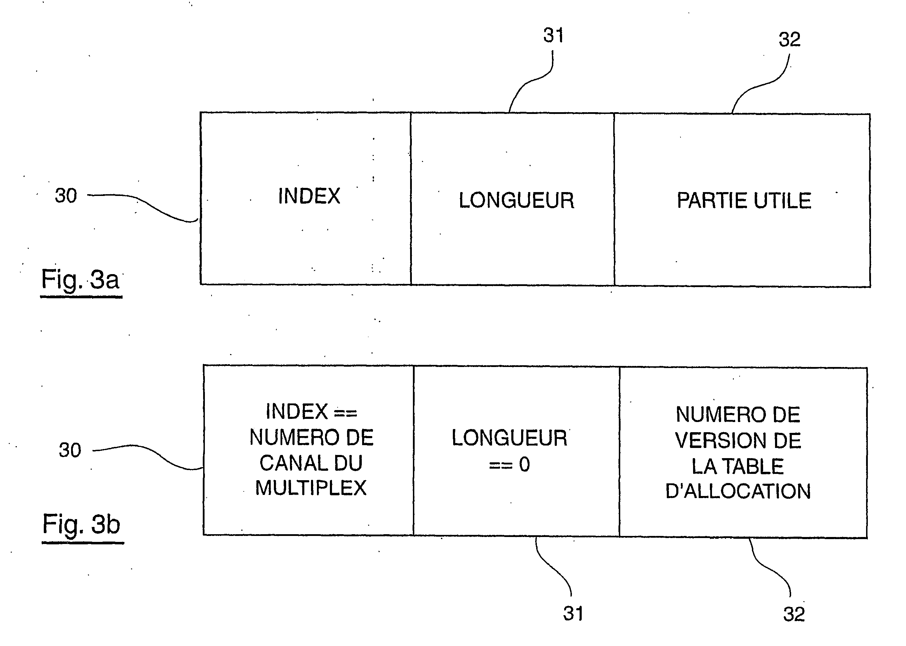

On décrit désormais, en relation avec les figures 3a et 3b, la structure des unités de flux informatives et des unités de flux de changement de version, mise en oeuvre par l'invention.

Les éléments de contenu fictifs introduits par l'invention ont avantageusement la même structure que les éléments de contenu réels, et sont transmis, par le même canal de transmission, au sein du multiplex.

A titre d'exemple, on décrit dans la suite le cas des unités de flux proposées par le standard MPEG4.

Dans le cadre de la norme ISO/14496-1 (MPEG4 système), et plus particulièrement dans le cas du multiplex dénommé FlexMux, une unité de flux numérique comprend trois champs référencés 30 à 32 correspondant respectivement:
- à un index 30, généralement codé entre 0 et 255, correspondant au numéro de canal du multiplex et permettant d'identifier le flux numérique considérée
- à la longueur 31 du paquet;
- à la partie utile 32 de l'élément de contenu.

L'invention propose d'introduire des éléments de contenu fictifs, correspondant à des paquets FlexMux ne véhiculant pas de données dans leur partie utile 32. De tels paquets sont caractérisés par la présence de la valeur nulle dans le champ de longueur référencé 31, ce qui les rend aisément détectables par un récepteur. Ils véhiculent en outre le numéro de version de la table d'allocation (ou table FMC pour FlexMuxChannelTable) applicable au flux repéré par l'index 30 dans leur partie utile 32.

## Revendications

1. Procédé de multiplexage dynamique de flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique, ladite table d'allocation portant un numéro de version,
**caractérisé en ce que**, pour signaler qu'un changement de version de ladite table d'allocation s'applique à un flux numérique donné, on transmet une rafale d'au moins une unité de flux de changement de version comprenant :
- l'identifiant courant dudit flux numérique ;
- un indicateur permettant de déterminer que l'unité de flux est une unité de flux de changement de version ;
- le numéro de version devenant applicable pour ledit flux numérique.

2. Procédé de multiplexage dynamique selon la revendication 1, **caractérisé en ce que** ladite rafale comprend au moins deux unités de flux de changement de version consécutives.

3. Procédé de multiplexage dynamique selon la revendication 1, **caractérisé en ce que** ladite rafale comprend un nombre d'unités de flux de changement de version consécutives suffisant pour couvrir une fenêtre de perturbation prédéterminée pendant laquelle il est possible qu'aucune unité de flux ne soit reçue de façon correcte.

4. Procédé de multiplexage dynamique selon la revendication 3, **caractérisé en ce que** ladite fenêtre de perturbation est comprise entre 0,2 et 1 s.

5. Procédé de multiplexage dynamique selon l'une quelconque des revendications 1 à 4, **caractérisé en ce que** ledit indicateur est un champ précisant la longueur de la partie utile de l'unité de flux, ladite valeur valant par définition zéro lorsqu'il s'agit d'une unité de flux de changement de version.

6. Procédé de multiplexage dynamique selon l'une quelconque des revendications 1 à 5, **caractérisé en ce que**, dans une unité de flux de changement de version, le numéro de version est inscrit dans la partie utile de ladite unité de flux.

7. Procédé de multiplexage selon l'une quelconque des revendications 1 à 6, **caractérisé en ce qu'**au moins dans une phase de transition suivant la transmission de ladite rafale, on transmet au moins une autre unité de flux de changement de version.

8. Procédé de multiplexage selon l'une quelconque des revendications 1 à 7, **caractérisé en ce que** ladite table d'allocation est transmise dans ledit canal.

9. Procédé de multiplexage selon l'une quelconque des revendications 1 à 7, **caractérisé en ce que** ladite table d'allocation est transmise par une voie distincte dudit canal.

10. Procédé de multiplexage selon l'une quelconque des revendications 1 à 9, **caractérisé en ce que** ladite table d'allocation est transmise au moins deux fois avant de devenir applicable pour au moins un desdits flux.

11. Procédé de multiplexage selon l'une quelconque des revendications 1 à 10, **caractérisé en ce qu'**un changement de version s'applique dès la première unité de flux du flux concerné reçue après ladite rafale.

12. Procédé de multiplexage selon l'une quelconque des revendications 1 à 11, **caractérisé en ce que** lesdits flux appartiennent au groupe comprenant :
- les signaux audiovisuels naturels ;
- les signaux audiovisuels synthétiques ;
- les scènes en deux ou trois dimensions ;
- les données descriptives de données, appelées méta-data ;
- des données de protection d'accès et de droits.

13. Procédé de multiplexage selon l'une quelconque des revendications 1 à 12, **caractérisé en ce qu'**il est mis en oeuvre dans des applications de type MPEG4 ou MPEG2.

14. Signal multiplexant dynamiquement des flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique, ladite table d'allocation portant un numéro de version,
**caractérisé en ce que**, pour signaler qu'un changement de version de ladite table d'allocation s'applique à un flux numérique donné, il comprend une rafale d'au moins une unité de flux de changement de version comprenant :
- l'identifiant courant dudit flux numérique;
- un indicateur permettant de déterminer que l'unité de flux est une unité de flux de changement de version;
- le numéro de version devenant applicable pour ledit flux numérique.

15. Signal selon la revendication 14, **caractérisé en ce que** ledit indicateur est un champ précisant la longueur de la partie utile de l'unité de flux, ladite valeur valant par définition zéro lorsqu'il s'agit d'une unité de flux de changement de version.

16. Signal selon l'une quelconque des revendications 14 et 15, **caractérisé en ce que** ledit signal étant véhiculé sur un canal de données permettant la transmission d'unités de flux utiles, distinct d'un canal de signalisation permettant la transmission de données de signalisation, ladite unité de flux de changement de version a la même structure que lesdites unités de flux utiles et est véhiculée par ledit canal de données.

17. Signal selon l'une quelconque des revendications 14 à 16, **caractérisé en ce qu'**il est mis en oeuvre par le procédé de multiplexage dynamique selon l'une quelconque des revendications 1 à 13.

18. Dispositif de multiplexage dynamique de flux numériques transmis sous la forme d'unités de flux dans un même canal, chacune desdites unités de flux portant un identifiant de flux permettant de l'associer au flux numérique correspondant, l'allocation d'un identifiant à un flux numérique étant définie par une table d'allocation et pouvant varier dans le temps, de façon à permettre un multiplexage dynamique, ladite table d'allocation portant un numéro de version, **caractérisé en ce que**, pour signaler qu'un changement de version de ladite table d'allocation s'applique à un flux numérique donné, on transmet une rafale d'au moins une unité de flux de changement de version comprenant :
- l'identifiant courant dudit flux numérique ;
- un indicateur permettant de déterminer que l'unité de flux est une unité de flux de changement de version ;
- le numéro de version devenant applicable pour ledit flux numérique.

19. Dispositif de multiplexage dynamique selon la revendication 18, **caractérisé en ce qu'**il met en oeuvre le procédé de l'une quelconque des revendications 1 à 13.

20. Dispositif de multiplexage dynamique selon l'une quelconque des revendications 18 et 19, **caractérisé en ce qu'**il alimente des moyens de transmission:
- sur le réseau Internet ; et/ou
- sur un réseau DVB.

21. Récepteur d'un signal multiplexé selon le procédé de multiplexage dynamique de l'une quelconque des revendications 1 à 13, **caractérisé en ce qu'**il comprend des moyens de détection de ladite rafale, et des moyens d'activation du changement de version correspondant, sur le flux concerné.

## Claims

1. Method for the dynamic multiplexing of digital flows transmitted in the form of flow units in the same channel, each of the said flow units containing a flow identifier for associating it with the corresponding digital flow, the allocation of an identifier to a digital flow being defined by an allocation table and being able to vary in time, so as to provide for dynamic multiplexing, the said allocation table containing a version number,
**characterized in that**, in order to signal that a change of version of the said allocation table applies to a given digital flow, a burst of at least one version change flow unit is transmitted, containing:
- the current identifier of the said digital flow;
- an indicator for determining that the flow unit is a version change flow unit;
- the version number that becomes applicable for the said digital flow.

2. Dynamic multiplexing method according to Claim 1, **characterized in that** the said burst comprises at least two consecutive version change flow units.

3. Dynamic multiplexing method according to Claim 1, **characterized in that** the said burst comprises a sufficient number of consecutive version change flow units to cover a predetermined disturbance window during which it is possible that no flow unit is received correctly.

4. Dynamic multiplexing method according to Claim 3, **characterized in that** the said disturbance window is between 0.2 and 1 s.

5. Dynamic multiplexing method according to any one of Claims 1 to 4, **characterized in that** the said indicator is a field specifying the length of the useful part of the flow unit, the said value taking the value, by definition, of zero in the case of a version change flow unit.

6. Dynamic multiplexing method according to any one of Claims 1 to 5, **characterized in that**, in a version change flow unit, the version number is placed in the useful part of the said flow unit.

7. Multiplexing method according to any one of Claims 1 to 6, **characterized in that** at least in one transition phase following the transmission of the said burst, at least one other version change flow unit is transmitted.

8. Multiplexing method according to any one of Claims 1 to 7, **characterized in that** the said allocation table is transmitted in the said channel.

9. Multiplexing method according to any one of Claims 1 to 7, **characterized in that** the said allocation table is transmitted over a route that is separate from the said channel.

10. Multiplexing method according to any one of Claims 1 to 9, **characterized in that** the said allocation table is transmitted at least twice before becoming applicable for at least one of the said flows.

11. Multiplexing method according to any one of Claims 1 to 10, **characterized in that** a version change is applied from the first flow unit, of the flow in question, received after the said burst.

12. Multiplexing method according to any one of Claims 1 to 11, **characterized in that** the said flows belong to the group including:
- natural audiovisual signals;
- synthetic audiovisual signals;
- two- or three-dimensional scenes;
- data describing data, called metadata;
- access protection and rights protection data.

13. Multiplexing method according to any one of Claims 1 to 12, **characterized in that** it is implemented in MPEG4 or MPEG2 type applications.

14. Signal dynamically multiplexing digital flows transmitted in the form of flow units in the same channel, each of the said flow units containing a flow identifier for associating it with the corresponding digital flow, the allocation of an identifier to a digital flow being defined by an allocation table and being able to vary in time, so as to provide for dynamic multiplexing, the said allocation table containing a version number,
**characterized in that**, in order to signal that a change of version of the said allocation table applies to a given digital flow, it comprises a burst of at least one version change flow unit containing:
- the current identifier of the said digital flow;
- an indicator for determining that the flow unit is a version change flow unit;
- the version number that becomes applicable for the said digital flow.

15. Signal according to Claim 14, **characterized in that** the said indicator is a field specifying the length of the useful part of the flow unit, the said value taking the value, by definition, of zero in the case of a version change flow unit.

16. Signal according to either Claim 14 or Claim 15, **characterized in that**, since the said signal is conveyed on a data channel for the transmission of useful flow units, separate from a signalling channel for the transmission of signalling data, the said version change flow unit has the same structure as the said useful flow units and is conveyed by the said data channel.

17. Signal according to any one of Claims 14 to 16, **characterized in that** it is implemented by the dynamic multiplexing method according to any one of Claims 1 to 13.

18. Device for the dynamic multiplexing of digital flows transmitted in the form of flow units in the same channel, each of the said flow units containing a flow identifier for associating it with the corresponding digital flow, the allocation of an identifier to a digital flow being defined by an allocation table and being able to vary in time, so as to provide for dynamic multiplexing, the said allocation table containing a version number,
**characterized in that**, in order to signal that a change of version of the said allocation table applies to a given digital flow, a burst of at least one version change flow unit is transmitted, containing:
- the current identifier of the said digital flow;
- an indicator for determining that the flow unit is a version change flow unit;
- the version number that becomes applicable for the said digital flow.

19. Dynamic multiplexing device according to Claim 18, **characterized in that** it implements the method of any one of Claims 1 to 13.

20. Dynamic multiplexing device according to either Claim 18 or Claim 19, **characterized in that** it drives transmission means:
- on the Internet network; and/or
- on a DVB network.

21. Receiver of a signal multiplexed according to the dynamic multiplexing method of any one of Claims 1 to 13, **characterized in that** it includes means for detecting the said burst, and means for activating the corresponding version change, on the flow in question.

## Patentansprüche

1. Verfahren zur dynamischen Multiplexierung von digitalen Datenflüssen, die in Form von Flusseinheiten in einem gemeinsamen Kanal übertragen werden, wobei jede der Flusseinheiten eine Flusskennung trägt, die es ermöglicht, sie dem entsprechenden digitalen Fluss zuzuordnen, wobei die Zuweisung einer Kennung zu einem digitalen Fluss durch eine Zuweisungstabelle definiert wird und zeitlich variieren kann, um eine dynamische Multiplexierung zu erlauben, wobei die Zuweisungstabelle eine Versionsnummer trägt, **dadurch gekennzeichnet, dass**, um anzuzeigen, dass eine Versionsänderung der Zuweisungstabelle sich auf einen gegebenen digitalen Fluss bezieht, ein Burst mindestens einer Versionsänderung-Flusseinheit übertragen wird, der aufweist:
- die laufende Kennung des digitalen Flusses;
- einen Anzeiger, der es erlaubt festzustellen, dass die Flusseinheit eine Versionsänderung-Flusseinheit ist;
- die Versionsnummer, die für den digitalen Fluss anwendbar wird.

2. Dynamisches Multiplexierverfahren nach Anspruch 1, **dadurch gekennzeichnet, dass** der Burst mindestens zwei aufeinander folgende Versionsänderung-Flusseinheiten aufweist.

3. Dynamisches Multiplexierverfahren nach Anspruch 1, **dadurch gekennzeichnet, dass** der Burst eine ausreichende Anzahl von aufeinander folgenden Versionsänderung-Flusseinheiten aufweist, um ein vorbestimmtes Störfenster abzudecken, während dem es möglich ist, dass keine Flusseinheit korrekt empfangen wird.

4. Dynamisches Multiplexierverfahren nach Anspruch 3, **dadurch gekennzeichnet, dass** das Störfenster zwischen 0,2 und 1 s misst.

5. Dynamisches Multiplexierverfahren nach einem der Ansprüche 1 bis 4, **dadurch gekennzeichnet, dass** der Anzeiger ein Feld ist, das die Länge des Nutzbereichs der Flusseinheit präzisiert, wobei der Wert per Definition gleich Null ist, wenn es sich um eine Versionsänderung-Flusseinheit handelt.

6. Dynamisches Multiplexierverfahren nach einem der Ansprüche 1 bis 5, **dadurch gekennzeichnet, dass** in einer Versionsänderung-Flusseinheit die Versionsnummer in den Nutzbereich der Flusseinheit eingetragen ist.

7. Multiplexierverfahren nach einem der Ansprüche 1 bis 6, **dadurch gekennzeichnet, dass** zumindest während einer Übergangsphase nach der Übertragung des Bursts mindestens eine weitere Versionsänderung-Flusseinheit übertragen wird.

8. Multiplexierverfahren nach einem der Ansprüche 1 bis 7, **dadurch gekennzeichnet, dass** die Zuweisungstabelle in dem Kanal übertragen wird.

9. Multiplexierverfahren nach einem der Ansprüche 1 bis 7, **dadurch gekennzeichnet, dass** die Zuweisungstabelle von einem eigenen Pfad des Kanals übertragen wird.

10. Multiplexierverfahren nach einem der Ansprüche 1 bis 9, **dadurch gekennzeichnet, dass** die Zuweisungstabelle mindestens zwei Mal übertragen wird, ehe sie für mindestens einen der Flüsse anwendbar wird.

11. Multiplexierverfahren nach einem der Ansprüche 1 bis 10, **dadurch gekennzeichnet, dass** eine Versionsänderung ab der ersten Flusseinheit des betroffenen Flusses anwendbar ist, die nach dem Burst empfangen wird.

12. Multiplexierverfahren nach einem der Ansprüche 1 bis 11, **dadurch gekennzeichnet, dass** die Flüsse zu der Gruppe gehören, die aufweist:
- die natürlichen audiovisuellen Signale;
- die synthetischen audiovisuellen Signale;
- die zwei- oder dreidimensionalen Szenen;
- die Daten beschreibenden Daten, Metadaten genannt;
- die Zugriffs- und Rechtsschutzdaten.

13. Multiplexierverfahren nach einem der Ansprüche 1 bis 12, **dadurch gekennzeichnet, dass** es bei Anwendungen vom Typ MPEG4 oder MPEG2 eingesetzt wird.

14. Signal, das dynamisch Datenflüsse multiplexiert, die in Form von Flusseinheiten in einem gemeinsamen Kanal übertragen werden, wobei jede der Flusseinheiten eine Flusskennung trägt, die es ermöglicht, sie dem entsprechenden digitalen Fluss zuzuordnen, wobei die Zuweisung einer Kennung zu einem digitalen Fluss durch eine Zuweisungstabelle definiert wird und zeitlich variieren kann, um eine dynamische Multiplexierung zu erlauben, wobei die Zuweisungstabelle eine Versionsnummer trägt, **dadurch gekennzeichnet, dass** es, um anzuzeigen, dass eine Versionsänderung der Zuweisungstabelle sich auf einen gegebenen digitalen Fluss bezieht, einen Burst mindestens einer Versionsänderung-Flusseinheit aufweist, der enthält:
- die laufende Kennung des digitalen Flusses;
- einen Anzeiger, der es erlaubt festzustellen, dass die Flusseinheit eine Versionsänderung-Flusseinheit ist;
- die Versionsnummer, die für den digitalen Fluss anwendbar wird.

15. Signal nach Anspruch 14, **dadurch gekennzeichnet, dass** der Anzeiger ein Feld ist, das die Länge des Nutzbereichs der Flusseinheit präzisiert, wobei der Wert per Definition gleich Null ist, wenn es sich um eine Versionsänderung-Flusseinheit handelt.

16. Signal nach einem der Ansprüche 14 und 15, **dadurch gekennzeichnet, dass**, da das Signal auf einem Datenkanal transportiert wird, der die Übertragung von Nutzflusseinheiten erlaubt und sich von einem Signalisationskanal unterscheidet, der die Übertragung von Signalisationsdaten erlaubt, die Versionsänderung-Flusseinheit den gleichen Aufbau hat wie die Nutzflusseinheiten und vom Datenkanal transportiert wird.

17. Signal nach einem der Ansprüche 14 bis 16, **dadurch gekennzeichnet, dass** es gemäß dem dynamischen Multiplexierverfahren nach einem der Ansprüche 1 bis 13 verwendet wird.

18. Vorrichtung zur dynamischen Multiplexierung von digitalen Datenflüssen, die in Form von Flusseinheiten in einem gemeinsamen Kanal übertragen werden, wobei jede der Flusseinheiten eine Flusskennung trägt, die es ermöglicht, sie dem entsprechenden digitalen Fluss zuzuordnen, wobei die Zuweisung einer Kennung zu einem digitalen Fluss durch eine Zuweisungstabelle definiert wird und zeitlich variieren kann, um eine dynamische Multiplexierung zu erlauben, wobei die Zuweisungstabelle eine Versionsnummer trägt, **dadurch gekennzeichnet, dass**, um anzuzeigen, dass eine Versionsänderung der Zuweisungstabelle sich auf einen gegebenen digitalen Fluss bezieht, ein Burst mindestens einer Versionsänderung-Flusseinheit übertragen wird, der aufweist:
- die laufende Kennung des digitalen Flusses;
- einen Anzeiger, der es erlaubt festzustellen, dass die Flusseinheit eine Versionsänderung-Flusseinheit ist;
- die Versionsnummer, die für den digitalen Fluss anwendbar wird.

19. Dynamische Multiplexiervorrichtung nach Anspruch 18, **dadurch gekennzeichnet, dass** sie das Verfahren nach einem der Ansprüche 1 bis 13 anwendet.

20. Dynamische Multiplexiervorrichtung nach einem der Ansprüche 18 und 19, **dadurch gekennzeichnet, dass** sie Übertragungseinrichtungen:
- im Internet; und/oder
- in einem DVB-Netz speist.

21. Empfänger eines Signals, das gemäß dem dynamischen Multiplexierverfahren nach einem der Ansprüche 1 bis 13 multiplexiert wurde, **dadurch gekennzeichnet, dass** er Mittel zur Erkennung des Bursts und Mittel zur Aktivierung der entsprechenden Versionsänderung am betroffenen Fluss aufweist.
